# EUROPEAN PATENT APPLICATION

(11) **EP 1 357 038 A1**
(43) Date of publication of application: **29.10.2003**
(21) Application number: 03076060.7
(22) Date of filing: 11.04.2003
(51) Int. Cl.: B65B 43/26, B65B 43/30, B65G 47/90, B65G 47/91

(54) **Method and machine for gripping and opening punched cardboard elements and forming open-topped boxes.**

(30) Priority: 24.04.2002 IT MI20020895
(71) Applicant: Ronchipack S.r.l., Gessate (Milano) (IT)
(72) Inventor: Ronchi, Cesare, Cassina de' Pecchi (MI) (IT)
(74) Representative: Raimondi, Alfredo, Dott. Ing. Prof.

(57) **Abstract**

Machine for forming boxes (10,10a,10b,10c) with a closed bottom from punched and folded cardboard elements, which comprises: at least one apparatus (140) for gripping from a store (210) and opening a cardboard element (10) for forming the open box; at least one apparatus (150) for gripping and transporting open boxes; at least one conveyor belt (250) for transporting the formed box to the outlet of the machine, said gripping/opening and gripping/transporting apparatus comprising devices for moving respective gripping/opening means (140) or gripping/transporting means (150), said devices consisting of at least two controlled axes (X-X,Y-Y;X-X,Z-Z) able to determine free trajectories of the respective gripping/opening or gripping/transporting means in the respective planes (X,Y;X,Z).

## Description

The present invention relates to a method and a machine for gripping and opening punched cardboard elements and forming open-topped boxes.

In the technical sector relating to the packaging of containers such as bottles, tins and the like, apparatus able to form an open-topped box inside which said containers are inserted are known.

It is also known that said apparatus usually form part of more complex machines in which, in addition to the box-forming apparatus, devices for forming arrays of containers are provided, said devices operating in parallel and in synchronism with the box-forming apparatus so that the containers and the box reach simultaneously a same station in which means remove the array of containers and insert it into the box which is then closed and conveyed away for storage.

Although performing their function, these box-forming apparatus do not allow high hourly production outputs to be achieved since the forming sequence and the particular configuration of the apparatus itself result in dead time, in particular during closing of the bottom of the box, which cannot be eliminated using the known techniques.

In addition to this, with the known apparatus it is not possible to vary freely the configuration of the box according to the direction of pressing thereof, with the result that, in the case of variation of the latter, complicated retooling of the said apparatus must be performed.

The technical problem which is posed, therefore, is that of providing a method, a device for moving gripping means for containers/boxes, an apparatus for implementing the method and a machine for forming boxes and for filling them with arrays of containers, which are able to eliminate the dead time in the cycle according to the known art and consequently increase the hourly productivity of the forming machines and ensure greater precision and repeatability as regards the form and size of the finished box.

Within the scope of this problem a further requirement is that that the apparatus may be rapidly adapted to any orientation of the cardboard box to be formed without the need for complicated disassembly and retooling thereof. These technical problems are solved according to the present invention by a machine for forming boxes with a closed bottom from punched and folded cardboard elements, which comprises: at least one apparatus for gripping from a store and opening a cardboard element for forming the open box; at least one apparatus for gripping and transporting open boxes; at least one conveyor belt for transporting the formed box to the outlet of the machine, said gripping/opening and gripping/transporting apparatus comprising devices for moving respective gripping/opening means or gripping/transporting means, said devices consisting of at least two controlled axes able to determine free trajectories of the respective gripping/opening or gripping/transporting means in the respective planes.

The present invention relates further to an associated method for gripping and opening punched cardboard elements and forming open-topped boxes.

Further details may be obtained from the following description of a non-limiting example of embodiment of the invention, provided with reference to the accompanying plate of drawings, in which:
- Figure 1 shows a top plan view of the device according to the present invention for moving gripping/transporting apparatus for cardboard boxes and the like;
- Figure 2 shows a cross-sectional view along the plane indicated by II-II in Fig. 1;
- Figure 3 shows a schematically sectioned view, along the plane indicated by III-III in Fig. 4, of a first example of a machine for forming cardboard boxes according to the present invention;
- Figure 4 shows a schematically sectioned view along the plane indicated by IV-IV in Fig. 3;
- Figure 5 shows a schematic perspective view of a first variant of the machine according to Fig. 3;
- Figures 6a-6l show schematic views illustrating the working sequence of the machine according to Fig. 5 for forming a box;
- Figure 7 shows a cross-section, similar to that of Fig. 4, of a second example of embodiment of the machine according to the present invention;
- Figures 8 to 15 show schematic perspective views of application of the device according to the present invention for moving apparatus for gripping containers in machines for filling formed boxes;
- Figure 16 shows a schematic top plan view of a further embodiment of the apparatus according to the invention; and
- Figure 17 shows a schematic view of the station for filling open containers with arrays of bottles.

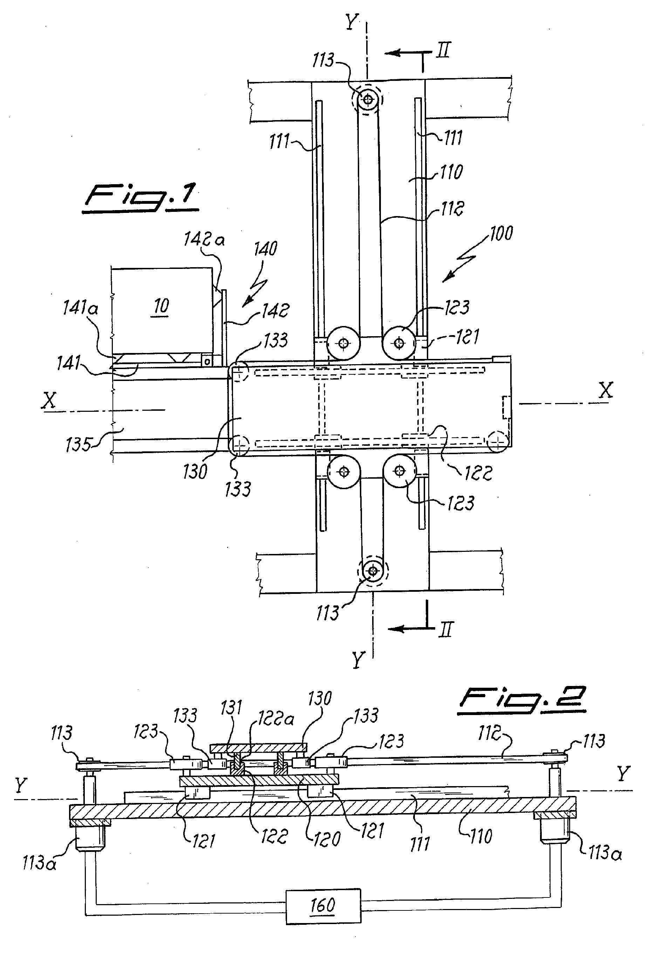

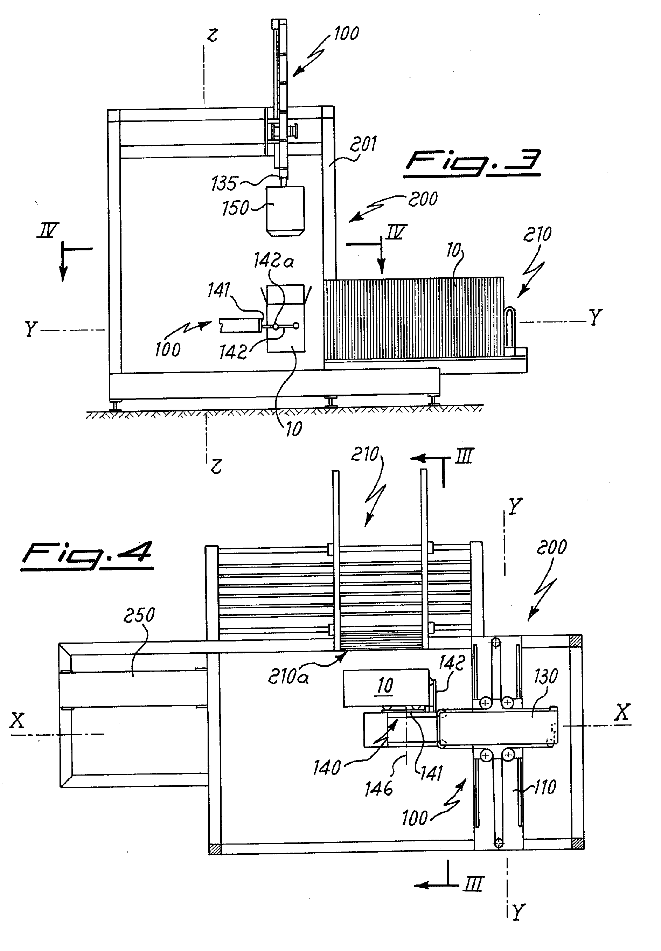

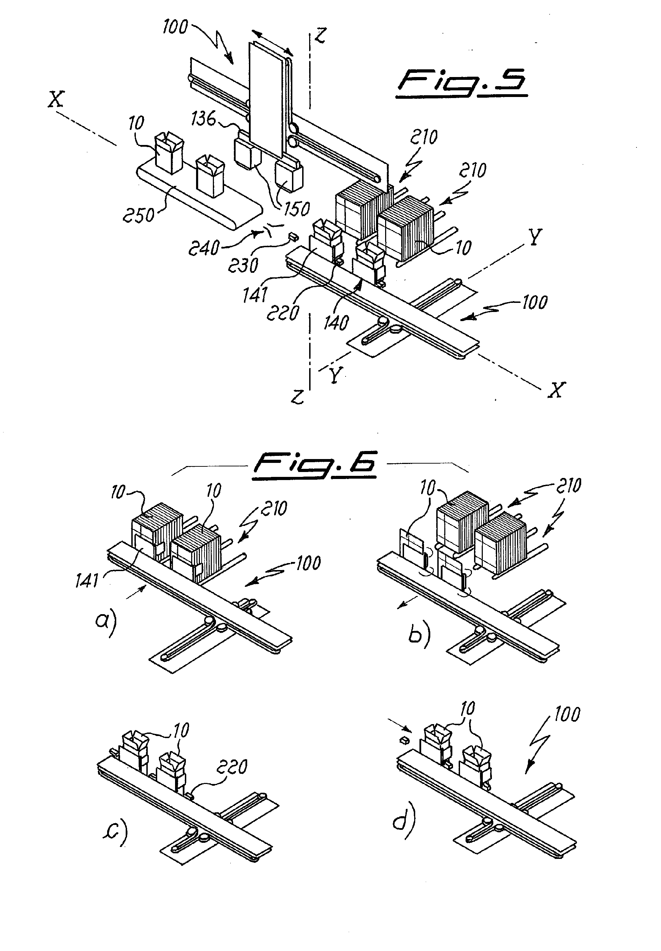

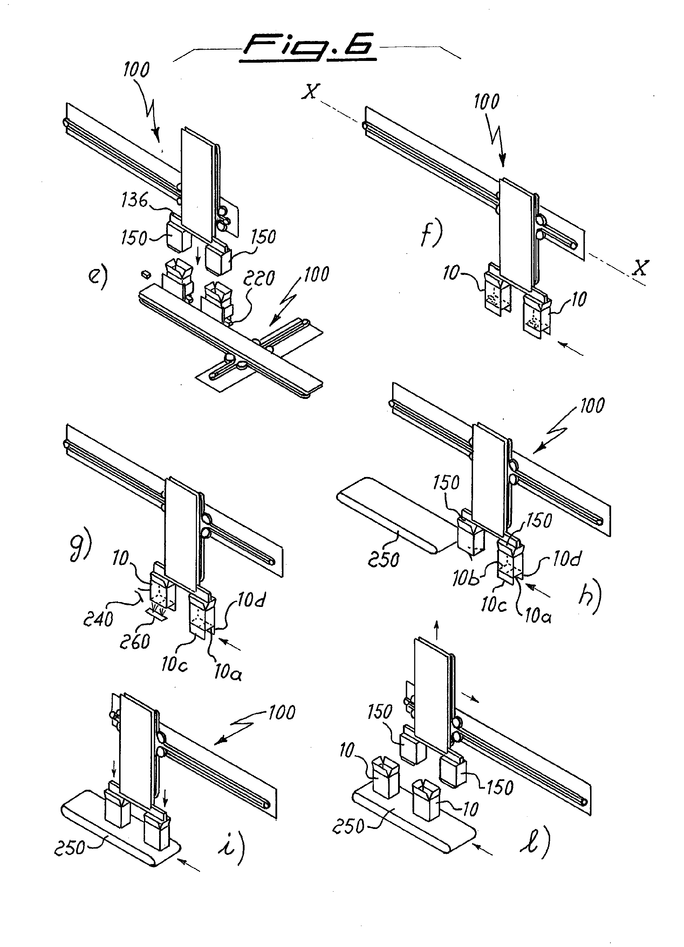

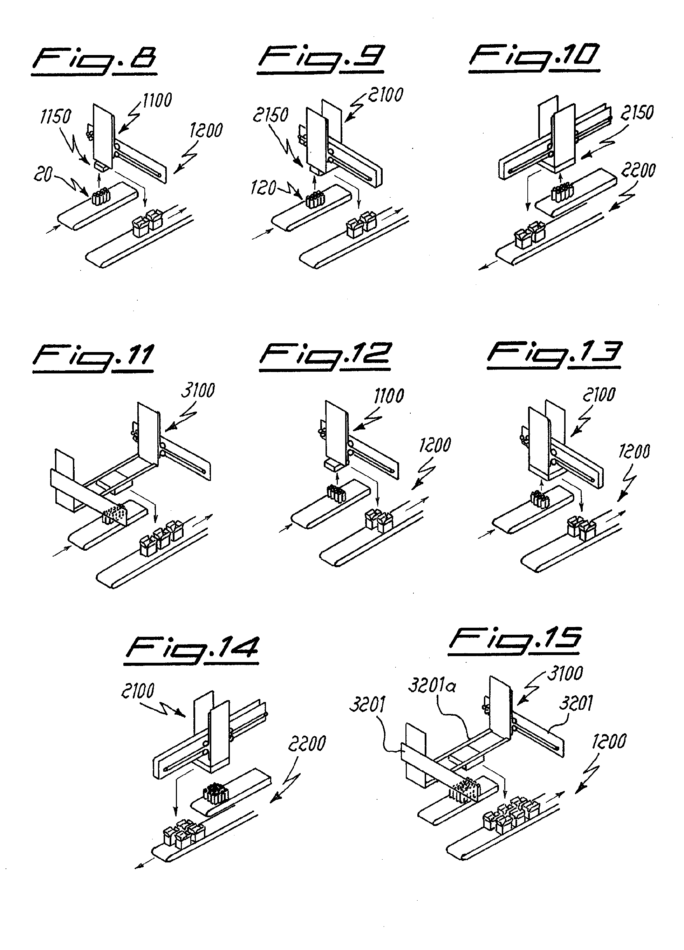

As illustrated in Figures 1 and 2, the device for moving apparatus for gripping/transporting cardboard elements/containers in particular for box-forming machines, comprises a first fixed support surface 110 which extends lengthwise in a transverse direction Y-Y and on which rails 111 are formed, said rails having, sliding along them, sliding blocks 121 integral with a first carriage 120 which is therefore able to perform a translatory movement in said transverse direction Y-Y.

Further pairs of fixed sliding blocks 122 are arranged on the surface of the first carriage 120 opposite to that of the sliding blocks 121, said additional sliding blocks having a seat 122a extending in a longitudinal direction X-X perpendicular to the direction Y-Y.

Respective rails 131 are movable inside said seats 122a, translationwise in the said direction X-X, said rails extending parallel to the longitudinal direction X-X and being integral with a second carriage 130 which is therefore movable translationwise in said longitudinal direction X-X.

The movement of said first carriage 120 and second carriage 130 is determined by the action of respective idle pulleys 133 which are integral with the carriage 130 and 123 integral with the carriage 120 and drive pulleys 113 integral with the fixed surface 110, all of them being connected by a single drive belt 112, the ends of which are fixed to the carriage 130.

The two pulleys 113 integral with the fixed surface 110 are driven by means of respective motors 113a controlled by programming and actuating means 160.

In this way by suitably combining the direction and the speed of rotation of the two opposite drive pulleys 113, it is possible to obtain a movement of the second carriage 130 along any trajectory of the surface X,Y.

The position of the carriage is detected by means of devices, for example of the encoder type, which are conventional per se and therefore neither illustrated nor described in detail and which are connected in a feedback loop to the programming and actuating means 160.

The second carriage 130 has attached thereto an arm 135 which extends in the longitudinal direction X-X and on which there are mounted gripping means 140 (Fig. 4) and/or transporting means 150 (Fig. 3) suitable for performing the various steps involved in forming a box 10 and filling it with bottles 20, described below in connection with the corresponding machine for packaging containers.

Said container packaging machines 200 (Figs. 3 and 4) essentially consist of a support frame 201 to which the following are connected:
- a store 210 for punched and flattened cardboard elements 10 which are fed forwards by devices of the conventional type in a direction parallel to the transverse direction Y-Y so that, in a predefined release position 210a, a cardboard element is always available; in greater detail said cardboard element is punched so as to produce four folding lines parallel to a vertical axis Z-Z and pairs of transverse bottom and top flaps, respectively at the rear 10a and front 10b with respect to the direction of feeding of the box towards the outlet of the machine, and bottom and top longitudinal flaps 10c and 10d;
- a device 100 for moving gripping means 140 for removing a cardboard element 10 from the position 210a and opening it in order to form the open box.

Said means 140 for gripping and opening the box are formed by a first arm 141, which is fixed to the arm 135 of the second carriage 130 and is equipped with suction cups 141a, and by a second arm 142 which is equipped with suction cups 142a and hinged on said first arm 141 with respect to which it is able to rotate from a substantially perpendicular position to a position substantially parallel thereto;
- a second device 100 for moving means 150 for transporting and squaring the box 10, arranged with a fixed surface 110 substantially parallel to the vertical direction Z-Z; the arm 135 of the second carriage 130 has at its end a prism 150 with dimensions substantially corresponding to the internal dimensions of the box 10 to be formed.

The said prism is positioned substantially aligned with the box 10 so as to be able to enter inside it after it has been opened and is movable, in a direction parallel to the vertical direction Z-Z, so as to be able to enter into and move out of the box, and in a longitudinal direction X-X, so as to be able to transport the said box during closing of the bottom;
- first fixed locators 220, able to co-operate with said forming means 150 so as to close the rear bottom flap 10a of the box;
- second fixed locators 230 aligned with the first ones 220 and able to co-operate with said forming means 150 so as to close the front bottom flap 10b of the box;
- fixed guides 240 arranged in front of the said means 220,230 in the direction of feeding of the box and able to co-operate with said forming means 150 so as to close the longitudinal bottom flaps 10c of the box;
- at least one conveyor belt 250 for transporting the formed box to the outlet of the machine.

With reference to Figures 6a to 61, the operating principle of the machine is as follows:
a) actuation of the apparatus 140 for gripping the cardboard element 10 so as to bring the suction cups 141a of the gripping arm 141 into contact with the first side of the cardboard element 10; during this step the second arm 142 is arranged perpendicularly with respect to the first arm 141;
b) retraction of the carriage 130 in the direction Y-Y so as to remove the cardboard element 10 and simultaneous actuation of the arm 142 which is arranged parallel to the arm 141 so as to be bring the suction cups 142a into contact with the other side of the cardboard element 10;
c) counter-rotation of the arm 142 which, returning into the position perpendicular to the arm 141, causes opening of the cardboard element 10 which assumes the form of an open box;
d) retraction of the carriage 130 so that the rear bottom flap 10a comes into contact with the fixed locator 220 so as to cause closing thereof;
e) downwards movement of the prism 150 inside the box 10 so that the suction cups of the prism comes into engagement with the internal surface of said closed flap 10b, retaining it;
f) forward movement of the carriage 120 in the direction X-X so as to displace the boxes integral with the prism in the direction of feeding so that the front bottom flap 10b comes into contact with the fixed locators 230 for closing thereof;
g) further forward movement of the carriage 130 supporting the prism 150, so that the bottom part of the box passes above the devices 260 for applying glue onto the bottom flaps 10a,10b; and
h) by means of the fixed means 240 for closing the longitudinal bottom flaps 10c;
i) forward movement of the prism 150 in the direction X-X so as to bring the box onto the conveyor belt 250 and downwards movement of the carriage 130 in the vertical direction Z-Z so as to exert a thrust in the vertical direction which causes compression of the longitudinal flaps 10c onto the transverse flaps 10a,10b situated between the said prism and the conveyor belt 250 so as to produce definitive closure of the bottom of the box;
l) raising of the prism in the vertical direction Z-Z and translation thereof in the direction X-X for return into the initial position at the start of the cycle.

Although described with reference to formation of a single box 10 with a single prism 150, it can be seen from Figure 5 how, in the case of small longitudinal dimensions of the box, it is possible to envisage a double store 210 of cardboard elements 10, two gripping devices 140 and two prisms 150 integral with the transporting apparatus 100 so to obtain doubling of the hourly production.

In addition to this, it is envisaged that in a preferred embodiment the gripping devices 140 are rotatable about a transverse axis 146 so as to be able to position the second arm 142 in a rear position (illustrated) or front position (not illustrated) with respect to the direction of feeding and with respect to the edge of the cardboard element.

This allows cardboard elements to be opened, whatever the relative position of their folding lines and the direction of pressing thereof and without the need for retooling of the machine, providing the latter with a great degree of versatility.

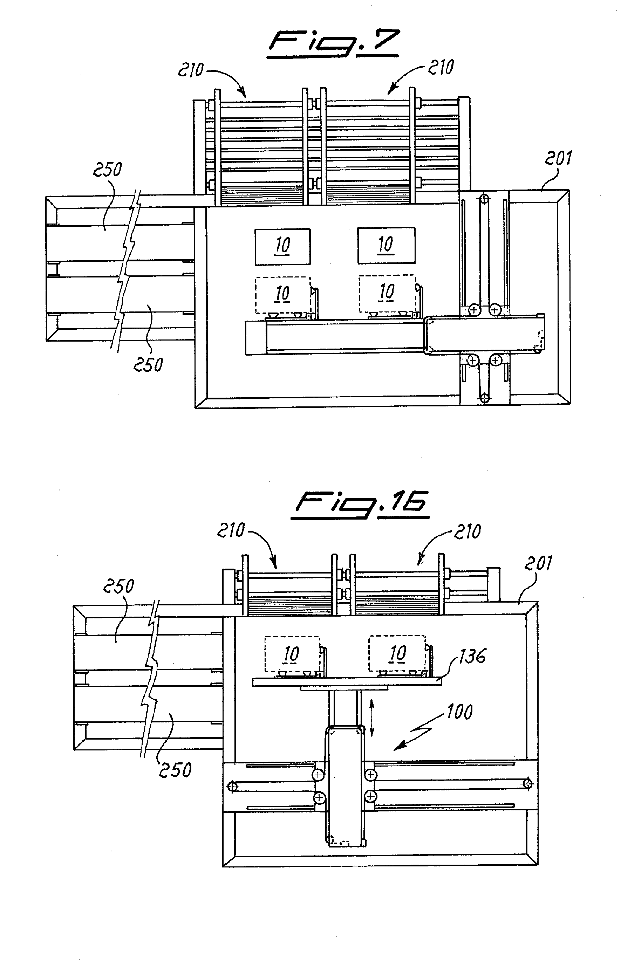

Similarly (Fig. 7) it is also possible to envisage that the forming machine 1200 has two conveyor belts 250 which are parallel to each other and a double position for opening the cardboard element 10; in this configuration, two gripping and transporting apparatus 150 arranged parallel to each other (not shown) are envisaged, but only one apparatus 140 for gripping and opening the cardboard elements; the latter apparatus in fact requires a cycle time which is approximately half the cycle time of the transporting apparatus.

Fig. 16 also shows a further embodiment of the apparatus for gripping the cardboard elements which in this case is arranged with the fixed surface oriented parallel to the longitudinal axis X-X and movable arm oriented in the transverse direction Y-Y.

In a similar manner to the gripping and transporting apparatus 100, the movable arm has at its free end a cross member 136 on which the devices 140 for gripping and opening the cardboard element are mounted.

The machine and the forming sequence described above are essentially based on a new box forming method which envisages the steps of:
a) actuating an apparatus 140 for gripping the cardboard element 10 so as to bring first gripping means 141a into contact with the first side of the cardboard element 10;
b) retraction of said gripping means 141a in the direction Y-Y in order to remove the cardboard element 10, and simultaneous actuation of second gripping means 142a so as to bring them into contact with the other side of the cardboard element 10;
c) return of the second gripping means into the initial position so as to cause opening of the cardboard element 10 which assumes the form of an open box;
d) retraction of the gripping means 140 in the longitudinal direction of feeding X-X of the box 10 so that the rear bottom flap 10a comes into contact with the fixed locator 220 so as to cause closing thereof;
e1) actuation, in a vertical direction Z-Z, of an apparatus for gripping and transporting the open box 10 so as to bring associated squaring and gripping means inside the box 10;
e2) engagement of squaring and gripping means with the rear bottom flap 10a of the box;
f) forward movement of the squaring and gripping means in the direction X-X so as to displace the boxes such that the front bottom flap 10b comes into contact with the fixed locators 230 for closing thereof;
g) further forward movement of the squaring and gripping means so as to cause the bottom part of the box to pass over the devices 260 for applying glue to the bottom flaps 10a,10b; and
h) by means of the fixed means 240 for closing the longitudinal bottom flaps 10c;
i1) forward movement of the squaring and gripping means in the direction X-X so as to bring the box onto the conveyor belt 250;
i2) downward movement of the squaring and gripping means in the vertical direction Z-Z so as to exert a thrust in the vertical direction which produces compression of the longitudinal flaps 10c onto the transverse flaps 10a,10b situated between the said prism and the conveyor belt 250 for definitive closing of the bottom of the box;
l1) raising of the squaring and gripping means in the vertical direction Z-Z;
l2) translation of the said means in the direction X-X for return into the initial start-of-cycle position.

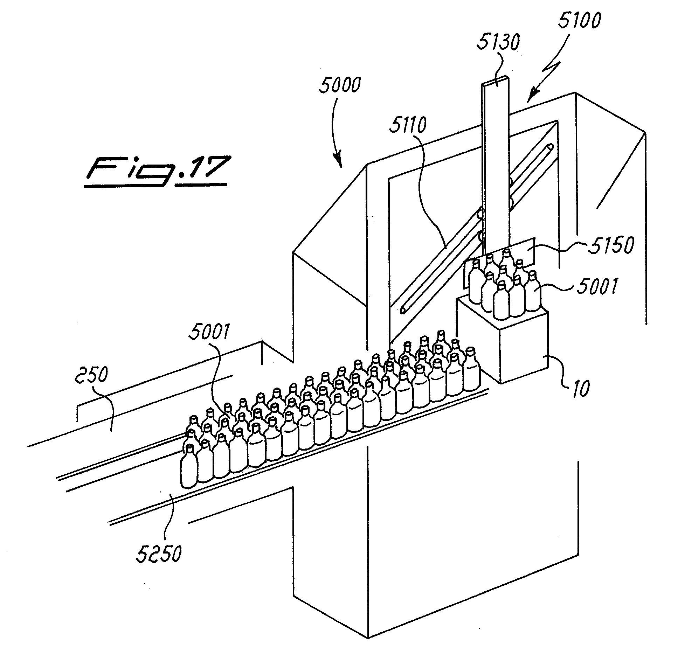

As illustrated in Figures 8 to 10, the device 100 for moving apparatus for gripping containers 20 may also be used for gripping and transporting arrays of containers 20 to be inserted inside formed open-topped boxes in the corresponding station of packaging machines.

In greater detail:
- Fig. 8 shows a machine 1200 with feeding of boxes and containers in parallel directions; in this case the gripping and transporting apparatus 1150 is arranged transversely with respect to the direction of feeding;
- Fig. 9 shows a machine 1200 which is similar to that of Fig. 8 and in which containers 120 of heavier weight are packaged; correspondingly in this case the gripping and transporting apparatus 2150 envisages a double actuating device 2100 for adapting it to the greater weight of the containers 120;
- Fig. 10 shows a machine 2200 with feeding of boxes 20 and containers 10 in parallel and superimposed directions; in this case the gripping and transporting apparatus 2150 is in turn parallel to the direction X-X of feeding and, as illustrated, the actuating device 2100 may be doubled so as to be adapted to the greater weight of the containers 120;
- Fig. 11 shows a machine 3200 which is similar to that of Fig. 8 and in which containers 220 of further increased weight are packaged; in this case the gripping and transporting apparatus 3150 envisages two separate actuating devices 3100 which are individually attached to a support structure 3201 and connected together by bars 3021a with which the means 3150 for gripping the containers 220 are integral.

Figures 12 to 15 show machines which are respectively similar to the corresponding Figures 8 to 11 and in which two rows of boxes and containers are fed.

Figure 17 shows the station 5000 for filling the boxes 10 which are fed to the said station 5000 by means of a first conveyor belt 250, with bottles 5001 fed by means of a second conveyor belt 5250, on which parallel rows travel.

An apparatus 5100 for gripping an array of bottles and depositing them inside the box 10 is arranged in the station 5000.

As illustrated, the fixed arm 5110 of the apparatus is arranged in a plane inclined from the bottom upwards in the direction of feeding of the bottles and the boxes and transversely between the two conveyor belts 250,5250 so that the lowermost end corresponds to the bottles and the uppermost end corresponds to the boxes. With this arrangement of the fixed arm 5110, the translation of the movable arm 5130 which carries the means 5150 for gripping the array of bottles 5001, from the position for gripping the bottles, into the position for depositing them in the box 10, produces a simultaneous change in height, resulting consequently in elimination of a downward/upward stroke in the overall cycle which is performed as follows:
- positioning of the gripping arm at the lowermost end and gripping of the bottles;
- starting movement of the movable arm 5130 from the lowermost end of the fixed arm 5110;
- outward stroke of the movable arm 5130 towards the top end of the fixed arm 5110, with simultaneous upwards movement of the bottles beyond the height of the upper free edge of the box;
- downward movement of the movable arm inside the box;
- release of the array of bottles;
- upward movement again of the movable arm;
- return stroke towards the bottom end of the fixed arm.

All the figures are self-explanatory for a person skilled in the art and therefore do not require a more detailed description.

Although the description has been provided identifying for the sake of convenience the directions as X-X = longitudinal, Y-Y = transverse and Z-Z = vertical, it is obvious for the technical expert how the device, apparatus and machine may be oriented in an equivalent manner in any direction.

With the method and the machine described above it is possible to achieve a reduction in the dead time of the cycle, since it is not envisged using auxiliary means such as pistons and the like during the closing step, as well as an improvement in the quality of the formed boxes since the internal gripping means according to the invention ensure greater squaring and repeatability of the said boxes.

## Claims

1. Device for moving means (140;150) for gripping/transporting cardboard elements/containers (10/20) in particular for packaging machines, **characterized in that** it comprises a first fixed surface (110) which extends lengthwise in a first direction (Y-Y) and on which guiding means (111) extending parallel to said first direction (Y-Y) are formed, on said guiding means there being slidable sliding blocks (121) integral with a first carriage (120), on the surface of the first carriage (120) opposite to that of the sliding blocks (121) there being arranged further pairs of fixed sliding blocks (122) provided with a seat (122a) extending in a second direction (X-X) perpendicular to the first direction (Y-Y), inside said seats (122a) there being movable translationwise in the said second direction (X-X) respective rails (131) extending parallel thereto (X-X) and integral with a second carriage (130), the movement of said first carriage (120) and second carriage (130) being determined by the action of motorized pulleys (113) which are integral with the fixed surface (110) and by idle drive pulleys (123;133) which are respectively integral with the first carriage (120) and the second carriage (130) and are all connected together by a single drive belt (112), the ends of which are fixed to the second carriage (130).

2. Device according to Claim 1, **characterized in that** an arm (135) extending in the said second direction (X-X) is attached to said second carriage (130).

3. Apparatus for gripping/opening punched and closed cardboard elements or moving open punched cardboard elements so as to form boxes, comprising devices (100) for moving gripping/opening means (140) or gripping/transporting means (150), **characterized in that** said movement devices consist of at least two controlled axes (X-X,Y-Y;X-X,Z-Z) able to determine free trajectories of the gripping/opening means (140) or gripping/transporting means in the respective planes (X,Y;X,Z).

4. Apparatus according to Claim 3, **characterized in that** said movement devices comprise a first fixed surface (110) which extends lengthwise in a first direction (Y-Y) and on which guiding means (111) extending parallel to said first direction (Y-Y) are formed, on said guiding means there being slidable sliding blocks (121) integral with a first carriage (120), on the surface of the first carriage (120) opposite to that of the sliding blocks (121) there being arranged further pairs of fixed sliding blocks (122) provided with a seat (122a) extending in a second direction (X-X) perpendicular to the first direction (Y-Y), inside said seats (122a) there being movable translationwise in the said second direction (X-X) respective rails (131) extending parallel thereto (X-X) and integral with a second carriage (130), the movement of said first carriage (120) and second carriage (130) being determined by the action of motorized pulleys (113) integral with the fixed surface (110) and by idle drive pulleys (123;133) respectively integral with the first carriage (120) and the second carriage (130) and all connected together by a single drive belt (112), the ends of which are fixed to the second carriage (130).

5. Apparatus according to Claim 4, **characterized in that** an arm (135) extending in the said second direction (X-X) is attached to said second carriage (130).

6. Apparatus according to Claim 4, **characterized in that** it consists of an apparatus for gripping/opening and forming punched and closed cardboard elements (10).

7. Apparatus according to Claim 6, **characterized in that** it comprises means (140) for gripping and opening said cardboard elements (10).

8. Apparatus according to Claim 7, **characterized in that** said means (140) for gripping and opening cardboard elements (10) are formed by a first arm integral with said arm (135) of the second carriage (130) of the actuating device extending in the second direction (X-X) and provided with respective suction-cup means (141a) and by a second arm (142) which is hinged with the first fixed arm (141) and provided with respective suction-cup means (142a).

9. Apparatus according to Claim 8, **characterized in that** said second arm (142) is able to rotate from a position substantially perpendicular to the first arm (141) to a position substantially parallel thereto and vice versa.

10. Apparatus according to Claim 8, **characterized in that** said first arm (141) is able to rotate about an axis (146) perpendicular to the said second direction (X-X).

11. Apparatus according to Claim 10, **characterized in that** said rotation of the first arm (141) is through 180°.

12. Apparatus according to Claim 3, **characterized in that** said first direction (Y-Y) is parallel to that for removal of the closed cardboard element (10) from a holding store (210).

13. Apparatus according to Claim 3, **characterized in that** said first direction (Y-Y) is perpendicular to that for removal of the cardboard element (10) from a holding store (210).

14. Apparatus according to Claim 4, **characterized in that** it consists of an apparatus for gripping/squaring open boxes.

15. Apparatus according to Claim 14, **characterized in that** it comprises means (150) for gripping internally the open boxes.

16. Apparatus according to Claim 15, **characterized in that** said box gripping means consist of a parallelepiped (150) having dimensions substantially corresponding to the internal dimensions of the box (10) and integral with the arm (135) of the actuating carriage (130).

17. Apparatus according to Claim 16, **characterized in that** means for engagement with at least one internal surface of the box are applied to said parallelepiped (150).

18. Apparatus according to Claim 17, **characterized in that** said engaging means consist of suction-cup means.

19. Apparatus according to Claim 17, **characterized in that** said at least one internal surface of the box is the internal surface of the rear bottom closing flap (10a).

20. Machine for forming boxes (10,10a,10b,10c) with a closed bottom from punched and folded cardboard elements, in which there are defined a first direction (X-X) of feeding of the boxes along the machine, a second direction (Y-Y) transverse to the feeding direction and a third vertical direction (Z-Z) perpendicular to the plane (X, Y) containing the two said other directions, said cardboard elements being punched so as to form four folding lines parallel to the vertical axis (Z-Z) and pairs of bottom and top transverse flaps respectively at the rear (10a) and front (10b) with respect to the direction (X-X) of feeding of the box and bottom and top longitudinal flaps (10c,10d), which comprises:
- at least one apparatus (140) for gripping from a store (210) and opening a cardboard element (10) for forming the open box;
- at least one apparatus (150) for gripping and transporting open boxes;
- at least one conveyor belt (250) for transporting the formed box to the outlet of the machine,
said gripping/opening and gripping/transporting apparatus comprising devices for moving respective gripping/opening means (140) or gripping/transporting means (150), **characterized in that** said devices consist of at least two controlled axes (X-X,Y-Y;X-X,Z-Z) able to determine free trajectories of the respective gripping/opening or gripping/transporting means in the respective planes (X,Y;X,Z).

21. Machine according to Claim 20, **characterized in that** said movement devices comprise a first fixed surface (110) which extends lengthwise in said second direction (Y-Y) and on which guiding means (111) extending parallel to said second direction (Y-Y) are formed, on said guiding means there being slidable sliding blocks (121) integral with a first carriage (120), on the surface of the first carriage (120) opposite to that of the sliding blocks (121) there being arranged further pairs of fixed sliding blocks (122) provided with a seat (122a) extending in said first direction (X-X) perpendicular to the second direction (Y-Y), inside said seats (122a) there being movable translationwise in the said first direction (X-X) respective rails (131) extending parallel thereto (X-X) and integral with a second carriage (130), the movement of said first carriage (120) and second carriage (130) being determined by the action of motorized pulleys (113) integral with the fixed surface (110) and by idle drive pulleys (123;133) respectively integral with the first carriage (120) and the second carriage (130) and all connected together by a single drive belt (112), the ends of which are fixed to the second carriage (130).

22. Machine according to Claim 21, **characterized in that** an arm (135) extending in the said first direction (X-X) is attached to said second carriage (130).

23. Machine according to Claim 21, **characterized in that** said means (140) for gripping and opening cardboard elements (10) are formed by a first arm integral with said arm (135) of the second carriage (130) of the actuating device, extending in the first direction (X-X) and provided with respective suction-cup means (141a), and by a second arm (142) hinged with the first fixed arm (141) and provided with respective suction-cup means (142a).

24. Machine according to Claim 23, **characterized in that** said second arm (142) is able to rotate from a position substantially perpendicular to the first arm (141) to a position substantially thereto and vice versa.

25. Machine according to Claim 23, **characterized in that** said first arm (141) is able to rotate about an axis (146) perpendicular to the said first direction (Y-Y).

26. Machine according to Claim 25, **characterized in that** said rotation of the first arm (141) is through 180°.

27. Machine according to Claim 21, **characterized in that** said second direction (Y-Y) is perpendicular to that (X-X) of feeding of the open cardboard element (10).

28. Machine according to Claim 21, **characterized in that** said second direction (Y-Y) is parallel to that of feeding of the open cardboard box (10).

29. Machine according to Claim 20, **characterized in that** said box gripping means consist of a parallelepiped (150) having dimensions substantially corresponding to the internal dimensions of the box (10) and integral with the arm (135) of the actuating carriage (130).

30. Machine according to Claim 29, **characterized in that** means for engagement with at least one internal surface of the box are applied to said parallelepiped (150).

31. Machine according to Claim 30, **characterized in that** said engagement means consist of suction-cup means.

32. Machine according to Claim 30, **characterized in that** said at least one internal surface of the box is the internal surface of the rear bottom closing flap (10a).

33. Machine according to Claim 20, **characterized in that** it comprises at least one store (210) containing punched and closed cardboard elements and provided with devices for feeding said cardboard elements to a predefined release position (210a).

34. Machine according to Claim 20, **characterized in that** it comprises fixed locators (220) able to co-operate with said forming means (150) for closing the rear bottom flap (10a) of the box.

35. Machine according to Claim 20, **characterized in that** it comprises fixed locators (230) able to co-operate with said forming means (150) so as to close the front bottom flap (10b) of the box.

36. Machine according to Claim 20, **characterized in that** it comprises fixed guides (240) arranged in front of the said means (220,230) in the direction (X-X) of feeding of the box and able to co-operate with said forming means (150) so as to close said bottom side flaps (10c) of the box.

37. Machine according to Claim 20, **characterized in that** it comprises a plurality of stores (210) for cardboard elements.

38. Machine according to Claim 37, **characterized in that** it comprises a number of means (140) for gripping/opening the cardboard element, corresponding to the number of stores (210) for said elements.

39. Machine according to Claim 38, **characterized in that** it comprises a number of gripping/transporting means (150) corresponding to the number of conveyor belts (250) for removal of the boxes (10).

40. Machine according to Claim 20, **characterized in that** it comprises a station (5000) for filling the boxes (10) fed by a belt (250) with arrays of containers (20;120;220) fed by a belt (5250) parallel to the other belt.

41. Machine according to Claim 40, **characterized in that** it comprises a device (5100) for gripping arrays of containers (5001) for inserting then into formed boxes (10).

42. Machine according to Claim 41, **characterized in that** said gripping device is arranged perpendicularly with respect to the direction of feeding of the bottles and the boxes on the respective belts (250,5250).

43. Machine according to Claim 41, **characterized in that** said gripping device is arranged parallel to the direction of feeding of the bottles and the boxes on the respective belts (250,5250).

44. Machine according to Claim 40, **characterized in that** the conveyor belts are arranged alongside each other on the same plane.

45. Machine according to Claim 40, **characterized in that** the conveyor belts are arranged above each other on different planes.

46. Machine according to Claim 41, **characterized in that** the fixed arm (5110) of the apparatus is arranged in a plane inclined from the bottom upwards in the direction of feeding of the bottles and the boxes and transversely between the two conveyor belts (250,5250).

47. Method for forming boxes (10,10a,10b,10c) with a closed bottom from punched and folded cardboard elements, in which there are defined a first direction (X-X) of feeding of the boxes along the machine, a second direction (Y-Y) transverse to the feeding direction and a third vertical direction (Z-Z) perpendicular to the plane (X, Y) containing the two said other directions, said cardboard elements being punched so as to form four folding lines parallel to the vertical axis (Z-Z) and pairs of bottom and top transverse flaps respectively at the rear (10a) and at the front (10b) with respect to the direction of feeding of the box and bottom and top longitudinal flaps (10c,10d), which envisages the steps of:
a) actuating an apparatus (140) for gripping the cardboard element (10) so as to bring first gripping means (141a) into contact with the first side of the cardboard element (10) ;
b) retraction of said gripping means (141a) in the transverse direction (Y-Y) so as to remove the cardboard element (10), and simultaneous actuation of second gripping means (142a) so as to bring them into contact with the other side of the cardboard element (10) ;
c) return of the second gripping means (142) into the initial position so as to cause opening of the cardboard element (10) which assumes the form of an open box;
d) retraction of the gripping means (140) in the longitudinal direction of feeding (X-X) of the box (10) so that the bottom rear flap (10a) comes into contact with the fixed locator (220) so as to cause closing thereof;
e1) actuation, in a vertical direction (Z-Z), of an apparatus (150) for gripping and transporting internally the open box (10) so as to bring associated gripping means inside the box (10) ;
e2) engagement of gripping means (150) with the bottom rear flap (10a) of the box (10);
f) forward movement of the gripping means (150) in the feeding direction (X-X) so as to displace the boxes such that the front bottom flap (10b) comes into contact with the fixed locators (230) for closing thereof;
g) further forward movement of the gripping means so as to cause the bottom part of the box to pass over the devices (260) for applying glue to the bottom flaps (10a,10b); and
h) by means of the fixed means (240) for closing the longitudinal bottom flaps (10c);
i1) forward movement of the gripping means in the feeding direction (X-X) so as to bring the box onto the conveyor belt (250) ;
i2) downward movement of the gripping means in the vertical direction (Z-Z) so as to exert a thrust in the vertical direction on the transverse flaps (10a,10b) and longitudinal flaps (10c) situated between the said prism and the conveyor belt (250) so as to produce compression thereof and definitive closing of the bottom of the box;
l1) raising of the gripping means in the vertical direction (Z-Z); and
l2) displacement of the said means in the feeding direction (X-X) for return into the initial start-of-cycle position.
